(19)

**Europäisches Patentamt**

**European Patent Office**

**Office européen des brevets**

(11) **EP 4 726 557 A1**

(12) **EUROPEAN PATENT APPLICATION**

(43) Date of publication:
15.04.2026 Bulletin 2026/16

(21) Application number: 24315462.2

(22) Date of filing: 09.10.2024

(51) International Patent Classification (IPC):
*G06F 12/0802* (2016.01)    *G06N 3/045* (2023.01)
*G06N 3/08* (2023.01)    *G06F 12/0893* (2016.01)

(52) Cooperative Patent Classification (CPC):
**G06F 12/0802; G06F 12/0893; G06N 3/042;**
**G06N 3/044; G06N 3/045; G06N 3/08; G06N 3/084;**
**G06N 3/088; G06N 5/01; G06N 5/022; G06N 5/041;**
**G06N 7/01; G06N 20/00;** G06F 2212/1041;
G06F 2212/40

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Amadeus S.A.S.**
**06410 Biot (FR)**

(72) Inventors:
• **Acuna Agost, Rodrigo**
**06410 Biot (FR)**

• **Boudia, Mourad**
**06410 Biot (FR)**
• **Thomas, Eoin**
**06410 Biot (FR)**
• **Habi, Mohamed**
**06410 Biot (FR)**
• **Avranas, Apostolos**
**06410 Biot (FR)**
• **Marragony, Salvatore**
**06410 Biot (FR)**

(74) Representative: **Samson & Partner Patentanwälte**
**mbB**
**Widenmayerstraße 6**
**80538 München (DE)**

(54) **PROVISION OF A CACHE-BASED RESPONSE**

(57)    A method, system, and computer program for cache-based response provision is presented. Responses to requests are stored in a cache, wherein each response is associated with one or more generated embeddings that were generated by at least two different embedding models to at least one input and/or applying the same embedding model on at least two different inputs. When a current request is received, a similarity of one or more current embeddings generated for the current request with the one or more generated embeddings of each cached response is determined. In response to determining that the similarity of the one or more current embeddings with the one or more generated embeddings of at least one response is above a threshold, the response associated with generated embeddings with the highest similarity is returned, whereas otherwise a new response from an original data source and returning the new response.

Fig. 1

## Description

### FIELD

The present disclosure relates to caching concepts, in particular, to methods and systems for cache-based response provision.

### BACKGROUND

Caching is an important task in almost all computing systems in order to achieve efficient storage and data retrieval. A cache is a high-speed data storage layer that temporarily stores frequently used data, allowing for faster access to that data. It is useful because it reduces the time needed to access data by reducing the need to access the underlying primary and original but significantly slower storage layer.

A common technical problem with caches is how to keep a cache up to date. However, this is not the only issue that may arise when relying on cached entries. In some caching architectures and implementations, it may even be difficult to determine whether a cached entry is the correct response to a current, i.e., newly received request. Returning a cached but wrong entry, which is, thus, not a response to the current request, is equally useless as providing an outdated cached entry.

The issue of returning cached and possibly up-to-date but wrong responses to requests occurs in non-deterministic systems, in which requests and responses can be formulated in multiple ways. These systems often concern requests and responses in natural language or other types of language, e.g., programming language, machine-type language, and the like. Multiple requests, which differ in words and terms, may be needed to be responded in the same way in order to ensure a consistent response behaviour of the responding system. When applying a cache in these systems, from which responses can be retrieved, it is difficult to determine reliably whether there is a response stored in the cache that applies to the request currently received. Hence, there is a need to ensure an efficient, reliable, and consistent response provision system for these cache-based architectures.

### SUMMARY

In this context, according to a first aspect, a computer-implemented method for cache-based response provision is presented. The method comprises storing responses to requests in a cache, wherein each response is associated with one or more generated embeddings relating to the response and/or at least one request corresponding to the response, wherein the one or more generated embeddings are created by applying at least one embedding model to the at least one request and/or the response. Applying the at least one embedding model comprises applying at least two different embedding models to at least one input and/or applying the same embedding model on at least two different inputs, wherein inputs comprise at least two of the at least one request, the response, and a combination of the request and the response. The method further comprises receiving a current request and determining a similarity of one or more current embeddings generated for the current request by application of the at least one embedding model with the one or more generated embeddings of each response stored in the cache. In response to determining that the similarity of the one or more current embeddings with the one or more generated embeddings of at least one response is above a threshold, the method proceeds with returning the response associated with the one or more generated embeddings with the highest similarity, whereas, in response to determining that the similarity of the one or more current embeddings with the one or more generated embeddings of at least one response is not above the threshold, the method proceeds with generating a new response from an original data source and returning the new response.

In some embodiments, storing responses to requests in the cache comprises generating at least one generated embedding per response by feeding a combination model with embeddings outputted by the at least two different embedding models and/or by the same embedding model for the at least two different inputs, wherein the combination model outputs the at least one generated embedding. In some further embodiments, the combination model is a linear neural network. '

In some embodiments, storing responses to requests in the cache comprises generating at least two generated embeddings per response, wherein each generated embedding is generated by applying an embedding model on an input, wherein at least two different embedding models are applied and/or the same embedding model is applied with different inputs.

In some embodiments, determining a similarity of the one or more current embeddings with the at least two generated embeddings comprises determining an intermediate similarity between a current embedding and a corresponding stored generated embedding and combining intermediate similarities for generating the similarity. In some further embodiments, combining the intermediate similarities comprises applying a weighted sum on the intermediate similarities. In yet further embodiments, combining the intermediate similarities comprises applying a weighted SoftMax function on the intermediate similarities. In some related examples, the weights are determined by a grid search optimization.

In some embodiments, the method further comprises storing the new response with corresponding one or more generated embeddings in the cache. In some further embodiments, storing the new response is performed in response to determining that the response was correct.

In some embodiments, the embedding models comprise large language models. In some further embodiments, the requests are natural language-based questions and wherein the responses are natural language-based responses. In further embodiments, at least two different requests are associated with a single response stored in the cache, wherein at least one of the at least two different requests is generated by a large language model.

According to a second aspect, a computer system for cache-based response provision is provided, the system comprises at least one memory comprising a cache and at least one processor, wherein the at least one processor is configured to execute the methods as described herein.

According to a third aspect, a computer program product comprising program code instructions stored on at least one computer readable medium, wherein the program code instructions, when executed by processors of a computing system, cause the processors of the computing system to execute the methods as described herein.

The foregoing paragraphs have been provided by way of general introduction and are not intended to limit the scope of the following claims. The described embodiments, together with further advantages, will be best understood by reference to the following detailed description taken in conjunction with the accompanying drawings.

## BRIEF DESCRIPTION OF THE DRAWINGS

The foregoing and further objects, features and advantages of the present subject matter will become apparent from the following description of exemplary embodiments with reference to the accompanying drawings, wherein like numerals are used to represent like elements, in which:

Fig. 1 is an overview of a computing system for cache-based response provision according to the disclosure.

Fig. 2 presents processes performed according to a method according to the disclosure.

Fig. 3 shows an example of generating embeddings for cached responses according to embodiments.

Fig. 4 shows another example of generating embeddings for cached responses according to embodiments.

Fig. 5 pertains to embodiments based on intermediate similarities.

Fig. 6 presents processes for updating the cache according to embodiments.

Figs. 7A to 7E shows the improvement of the herein described methods with respect to cache utilization and accuracy.

Fig. 8 is diagrammatic representation of internal components of a computing system, which may implement all or part of the functionalities described herein.

## DETAILED DESCRIPTION

The present disclosure relates to methods and systems for cache-based response provision. In deterministic, i.e., one-to-one response provision systems, to which a specific request requires one specific response, caching is a suitable way to improve efficiency of response provision, since it reduces the need to access the primary sources and can - at least to some extent - rely on a fast local storage layer. The main task in these systems is to keep the cache up-to-date and/or to determine which entries are outdated.

The situation is, however, different in non-deterministic, i.e., many-to-many, one-to-many, or many-to-one response provision systems, in which one request can be responded in multiple ways and/or in which one response can be the correct one for multiple requests as is explained shortly in the following.

Examples of non-deterministic response provision systems are chatbots, which provide answers to questions. These chatbots are applied in different areas, such as assisting technicians in training, supporting programmers in providing code snippets, providing answers to questions on websites or in applications, and the like. The process of generating the answer by these chatbots is often supported by large language models and requires a huge amount of computational resources. The large language models have to be provided with a (possibly very large) set of documents, data files, historical information, and the like, to enhance their knowledge before they can be applied. Moreover, when a request (i.e., question) is transmitted to such a chatbot system, the underlying large language model needs to explore all this data again and again to retrieve the data for forming the response (i.e., answer). This process becomes even more expensive in terms of processing resources if the question is long and the answer to the question is long, too.

In addition, the large language models are known to be not consistent, i.e., asking a similar but other formulated question may lead to a completely different answer. Having different answers for basically the same question may lead to security, compatibility, and other issues if this occurs too often. For example, using a chatbot for supporting programmers may lead to code behaving unexpectedly when the same procedure works differently in different parts of the codes and/or may simply not be compatible. In another example, consider a chatbot for training of technicians controlling a technical machine. If two technicians receive different answers to a similar question, the whole security of the handling of the machine may be impacted. Therefore, consistency is also an important aspect to consider.

The solution to both problems of these non-deterministic response provision systems is the application of a cache. This already improves the first issue with respect to response times and processing resources. However, caching is not trivial in these systems as it is required to determine whether a request currently received has a corresponding response stored in the cache in order to ensure consistency of responses. The herein presented solution for cache-based response provision is based on a new way of building and controlling embeddings stored with cached responses as to maximize the use the of the cache, i.e., to minimize the used processing resources for generation of the responses, while ensuring consistency by reaching and preserving a required accuracy of the responses. Accuracy is herein defined as the ratio of the correct responses to all responses returned from the considered cache, which in turn is dependent on defining a suitable similarity threshold of the embeddings that finds a good balance between accuracy and cache-usage.

Embeddings are representations of objects like text, images, audio, and the like as points in a continuous vector space, in which the locations of the points in space are semantically meaningful. For example, when considering embeddings for requests as in the current disclosure, the aim is to produce embeddings (e.g., vectors) that have a smaller distance if two requests are similar and a larger distance if two requests are different. Embeddings are often used as input for machine learning models but can also be an output of other models. In the following, the models used for generating embeddings are denoted as embedding models. With the help of embeddings, the semantic meaning of similarity is transferred into the mathematical concept of a multidimensional space.

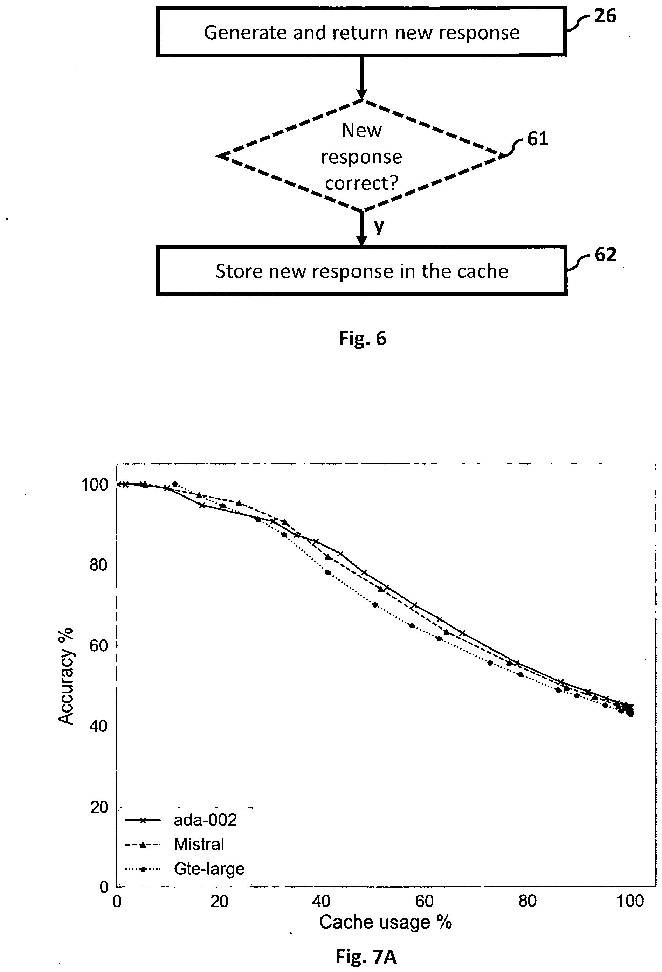

Known embedding models are the models of OpenAI, Inc., e.g., the ada-v2 (or also ada-002) model, and the open-source general text embeddings models, such as GTE-large or Mistral-based (e.g., Mistral-7B) model. These are the models that were used by the inventors for showing the improvement of the herein described cached-based response provision from a research perspective. Details can be seen in Figs. 7A to 7E and their description below. It is, however, noted that the herein described embedding models are not limited to those embedding models. Basically, any model that is based on a somewhat language-related input can be used, such as variants of large language models but also models that determine word vectors or the like for similarity (of keywords etc.) determination, which provide a vector representation of the language as output, i.e., the embedding.

The current embedding models known in the art (e.g., ada-002, Gte-large, and Mistral-7B) perform already well but when it comes to freely formulated questions to chatbots, they reach their limits. For example, assuming 50% of the questions submitted to a chatbot have answers stored in the cache 15, i.e., for 50% of the questions, the cache 15 could and should be used and for the other 50%, new answers must be generated. It can be shown that the above mentioned models underperform the possible optimal cache-usage by far. For example, when requiring an accuracy of 90% of correct answers, the models only use about 35% of the time the cache (instead of 70%, which would be the optimal solution). This observation is also depicted in Fig. 7A.

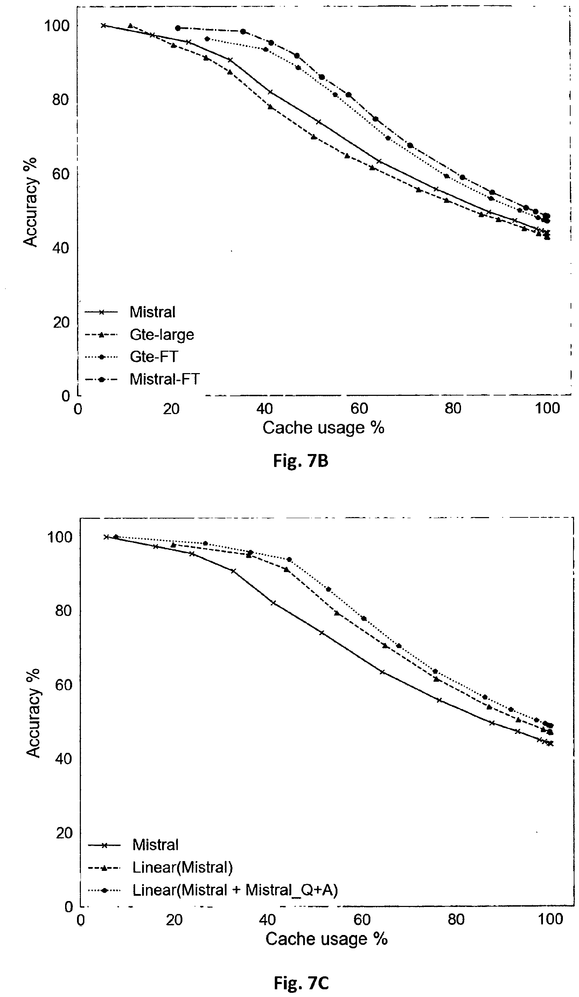

A first natural approach of improving the behaviour of the known models is to fine-tune the models by training the models further with similar and dissimilar requests to known (cached) responses. This training can be supported by large language models, which are instructed to create similar and dissimilar questions to answers. Additionally or alternatively, human users can create similar and dissimilar questions/requests. The models are then trained to minimize the distance or angle of two embeddings (vectors) that are similar in terms of request and/or response and to maximize the distance or angle of two embeddings that are dissimilar in this respect. Such a fine-tuning already improves the cache-usage and accuracy as is shown in Fig. 7B. However, fine-tuning may require many resources, and the improvement is limited. Therefore, the inventors have come to the solutions described in more detail in the following.

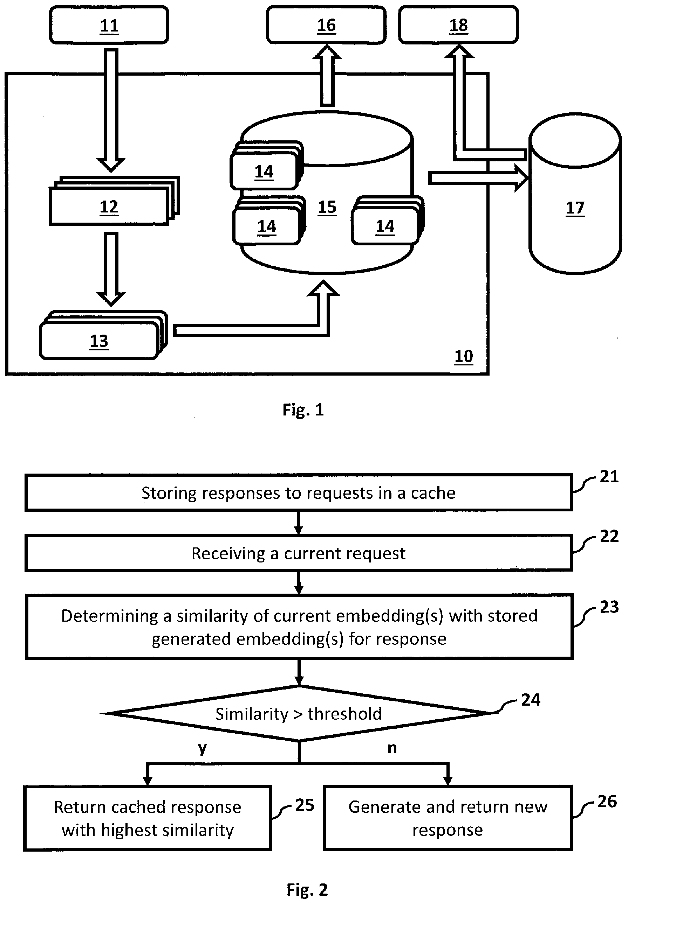

Starting with Fig. 1, which presents an overview of a computing system 10 for cache-based response provision according to the disclosure. The computing system 10 may be a distributed computing system comprising, e.g., a plurality of servers located at one or multiple geographic locations, a cloud computing system, or a single computing system with all necessary components comprised in one single device. The computing system receives a current request 11. The current request 11 may be received via a network, such as a wide area network, global network, the Internet, or a similar network, which may be a public or a private network and/or may include multiple interconnected networks as is known in the art. The current request 11 may be received from another device, e.g., from a user device. A user of the user device may input the request, e.g., a natural language question, in a graphic user interface, which may be connected via a website or application to the computing system 10.

The current request 11 is then used as input to one or more embedding models 12 to produce one or more current embeddings 13 for the current request 11. The current embeddings 13 are then compared to one or more generated, i.e. cached embeddings 14 for responses stored in a cache 15. It is noted that the cache 15 may store one or more generated embeddings 14 for multiple responses (as is shown in Fig. 1). In other words, each cached response is associated with one or more generated embeddings 14 relating to the cached response and/or at least one request corresponding to the cached response. This can also be considered as one set of data for each cached response, which comprises at least the response and one or more generated embeddings 14. In some embodiments, the set of data may also comprise (e.g., the natural language text of) one or more requests that relate to the cached response. The one or more generated embeddings 14 have been created by applying the at least one embedding model 12 to the at least one request and/or the response now stored in the cache.

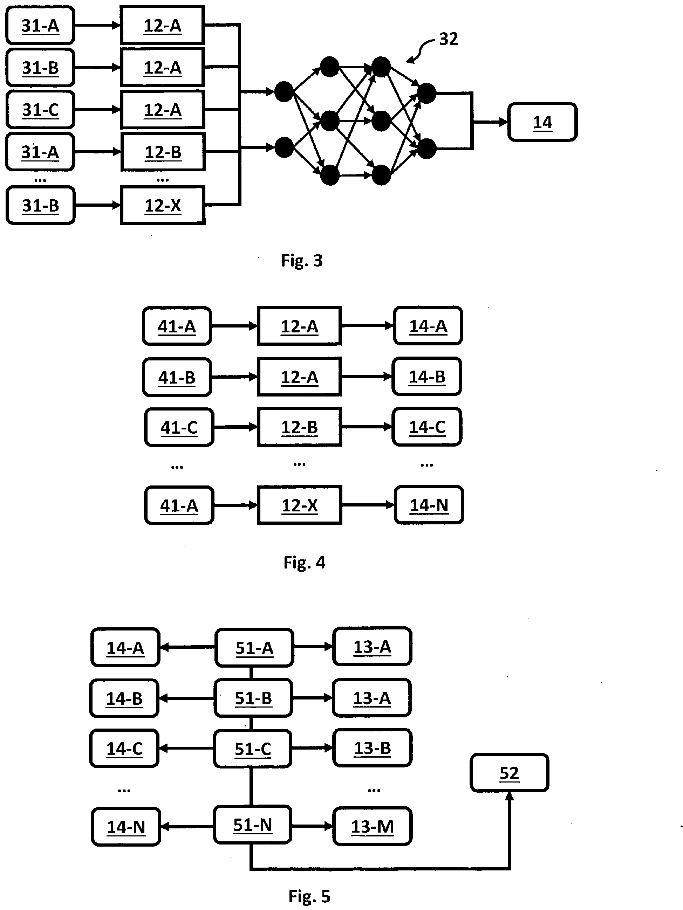

The comparison of the current embedding(s) 13 and the generated embedding(s) for the cached responses leads to a determination whether a response to the current request 11 is stored in the cache 15. This is achieved by determining a similarity (value) of the current embedding(s) 13 to the generated embedding(s)14 of each response. Examples of how to generate embeddings and how to determine a similarity between these embeddings are further described with respect to Figs. 3 to 5.

In response to determining that the similarity of the one or more current embeddings 13 with the one or more generated embeddings 14 of at least one response is above a threshold, also denoted as similarity threshold, the response 16 associated with the one or more generated embeddings 15 having the highest similarity is returned. In the other case, i.e., in response to determining that the similarity of the one or more current embeddings 13 with the one or more generated embeddings 14 of at least one response is not above (i.e. below) the threshold, a new response from an original data source 17 is generated and the new response 18 is returned.

In some embodiments, the new response 18 is stored with corresponding one or more generated embeddings 14 in the cache 15. The one or more generated embeddings 14 in this example may be at least in part the current embeddings 13 generated for the request 11 relating to the new response 18. In some embodiments, the new response 18 is only stored in the cache 15 if the new response 18 has been confirmed to be the correct response to the request 11. This may be done by an administrator, a human supervisor, and/or by using another application, which may be based on a machine learning model to determine the correctness of the new response 18 to the request 11. Further details are given later with respect to Fig. 6.

It is noted that, although Fig. 1 presents original source 17 as outside of the computing system 10, the original source 17 may also be part of the computing system 10. Different architectures of the computing system 10 exist that are suitable for the concepts disclosed herein. For example, the models may not be part of the computing system 10 and the generation of the current and/or generated embeddings 13, 14 may be done externally of the computing system 10. Hence, in some embodiments, the computing system 10 may only comprise the cache 15 and the logic for performing the methods as described herein, as e.g., described with respect to the following Fig. 2. In some embodiments, even the cache 15 may be outsourced and remote from the computing system 10.

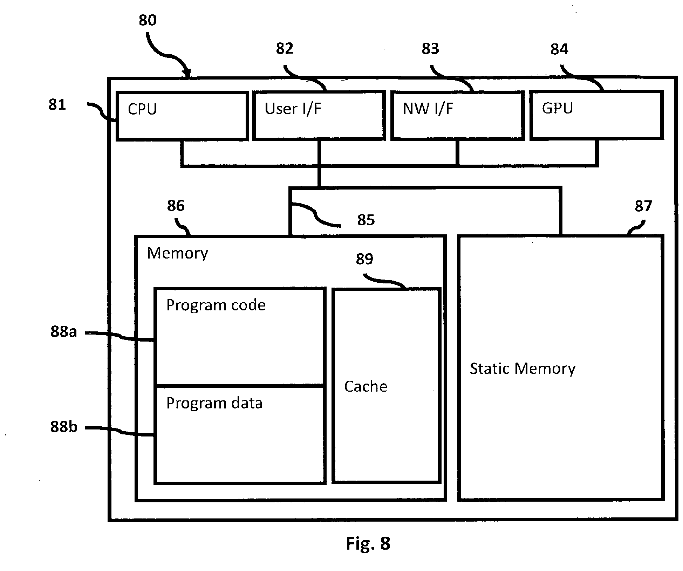

As indicated, Fig. 2 presents processes performed according to a method in line with the disclosure. The processes described herein may be generally defined as algorithms stored on suitable storage media and executed on a computing system (such as the computing system 10 of Fig. 1 or the computing system explained with respect to Fig. 8).

The method for cache-based response provision starts in box 21 with storing responses to requests in a cache 15. This is not a task that is strictly (but can) performed once but (updating the cache 15) may additionally or alternatively be a continuous process. Each response is associated with one or more generated embeddings 14 relating to the response and/or at least one request corresponding to the response. The one or more generated embeddings 14 are created by applying at least one embedding model 12 to the at least one request and/or the response.

For example, a text of a response may be stored in the cache 15. The response may have been generated by a machine learning model, such as a large language model in response to inputting a corresponding request. In the state of the art of embedding generation of texts and determining a similarity would then suggest to store the text of the response with the embedding generated for its request in the cache 15. However, the inventors have recognized that applying only one embedding model 12 to the request may be insufficient for requests in the herein considered response provision systems since this - depending on a chosen similarity threshold - would either return the cached response only if the request is almost identical to a current request 11 and would, thus, barely use the cache 15 or use the cache 15 in a sufficient manner but return responses that are not correct to a current request.

Therefore, applying the at least one embedding model 12 herein comprises applying at least two different embedding models 12 and/or (i.e., additionally or alternatively) applying the same embedding model 12 on at least two different inputs, wherein the inputs comprise at least two of the at least one request, the response, and a combination of the request and the response. It is noted that applying at least two embedding models 12 and/or the same embedding model 12 twice does not necessarily mean that the response is then stored with multiple embeddings in the cache 15. In some embodiments, the embeddings created by the embedding model(s) 12 are combined to form a final embedding correspond to this answer. This will be described further below with respect to Fig. 3.

As said, storing responses to requests in the cache 15 as shown in box 21 may be a process performed once in the past, e.g., when storing responses for known frequently asked requests in the cache 15, and/or continuously when new requests and responses are determined that should be stored in the cache 15. Hence, the next box 22, i.e., receiving a current request 11, shows a process that can happen asynchronously at any time - given that at least some responses with corresponding generated embeddings 13 are already stored in the cache 15. In other embodiments, the cache 15 may also be empty and the first generated, i.e., new responses 18 are consequently stored as explained further below. The current request 1 1 may be a question input by a user as explained before or even a request itself generated by a large language model for a specific topic.

The method proceeds in box 23 with determining a similarity of one or more current embeddings 13 generated for the current request 11 by application of the at least one embedding model 12 with the one or more generated embeddings 14 of each response stored in the cache 15. Hence, for each pair of stored response and received current request 11, a similarity (e.g., a similarity value) is determined. Determining the similarity is usually a fast process but may also, in some examples be improved by applying clustering methods as known in the art. In some embodiments, the similarity is the distance between the embeddings, which may be the Cosine distance, the Euclidean distance, the Manhattan distance, the Chebyshev distance, the Hamming distance, or any suitable distance for multidimensional spaces.

Depending on the outcome of the similarity determination, the methods proceeds differently as shown with diamond 24. In response to determining that the similarity of the one or more current embeddings with the one or more generated embeddings of at least one response is above a threshold (yes-branch), the method proceeds in box 25 with returning the response 16 associated with the one or more generated embeddings 14 with the highest similarity. In response to determining that the similarity of the one or more current embeddings with the one or more generated embeddings of at least one response is not above the threshold (no-branch), the method proceeds in box 26 with generating a new response 18 from an original data source 17 and returning the new response 18. As already indicated above, generating a new response 18 may be resource consuming and, thus, applying the yes-branch as often as possible without returning incorrect responses is an optimization that is achieved by using a plurality embedding models 12 or executions of the same embedding model 12 as is detailed in the following.

Fig. 3 shows an example of generating embeddings for cached responses according to embodiments. In embodiments related to Fig. 3, storing responses to requests in the cache 15 comprises generating at least one generated embedding 14 per response by feeding a combination model 32 with embeddings outputted by the at least two different embedding models 12-A, 12-B, ..., 12-X and/or by the same embedding model 12-A for the at least two different inputs 31-A, 31-B, 31-C, wherein the combination model 32 outputs the at least one generated embedding 14.

It is noted that Fig. 3 is a mere example and does not limit the disclosure. Hence, the number of X different embedding models 12 can be any number between 1 and a suitable upper limit, e.g., determined based on applicable embedding models 12, computation resources, and the like. Moreover, although Fig. 3 depicts three different inputs 31-A to 31-C, which may, e.g., be the text of one request 31-A, the text of the corresponding response 31-B, and a combination (by appending etc.) thereof 31-C, there may be less (e.g., only a subset) or even different inputs 31, for example, a combination of multiple requests with or without the response, and such. If multiple embedding models 12 are used in some examples, it may also be the case that, for some embedding models 12, multiple inputs 31 are used and, for other embedding models 12, only one input 31 is used, i.e., the model is only applied once with one input, e.g., the request. The specifics are up to the implementation and purpose of the cache-based response provision system using this approach.

The embeddings generated with the embedding models 12-A to 12-X are then input into the combination model 32. These intermediate embeddings may, e.g., be all appended or otherwise combined to form the input vector of the combination model 32. The combination model 32 may be, in some embodiments, a linear model, e.g., a linear neural network. Other suitable models may also be applied as long as they are capable of creating the generated embedding 14 from of the combined embeddings that were input. Sometimes, this additional combination model 32 is also denoted as linear head. The combination model 32 may, in some examples, generate one embedding 14. In some other examples, the combination model 32 may generate more embeddings 14, e.g., for longer requests, longer responses, and/or more applied embedding models 12.

Although Fig. 3 mainly refers to the generation of the cached generated embedding(s) 14, the same or at least similar procedure may apply when generating the current embedding(s) 13. For example, when different inputs 31-A, 31-B, 31-C are used for the generated embeddings 14 with embedding model 12-A, the generation of the current embedding 13 may use the output of one execution of the embedding model 12-A with the current request 11 three times as input for the combination model 32. Hence, the output of the embedding model 12-A is used three times for generating the input for the combination model 32 because the same input length for the combination model 32 is required.

The embodiments highlighted with Fig. 3 already improve the cache-usage when considering a specified accuracy level or the accuracy level when defining a cache-usage level as is illustrated with Fig. 7C. As can be seen in comparison with Fig. 7B, the improvement is similar to that of the fine-tuned models but the approach with combining models and using a linear head is significantly more efficient since fine-tuning requires much more resources than setting up a linear head. Hence, Fig. 3 is an efficient way of improving the cache-usage vs. accuracy trade-off.

Another example of generating embeddings for cached responses according to embodiments is now shown with respect to Fig. 4. In such embodiments, storing responses to requests in the cache 15 comprises generating at least two generated embeddings 14 per response, wherein each generated embedding 14-A, 14-B, 14-C, ..., 14-N is generated by applying an embedding model 12-A, 12-B, ..., 12-X on an input 41-A, 41-B, 41-C, wherein at least two different embedding models 12-A, 12-B, ..., 12-X are applied to the request and/or the same embedding model 12-A is applied with different inputs 41-A, 41-B, 41-C. If multiple embedding models 12 are used in these examples, it may also be the case that, for some embedding models 12, multiple inputs 41 are used and, for other embedding models 12, only one input 41 is used, i.e., the model is only applied once with one input, e.g., the request. The specifics are up to the implementation and purpose of the cache-based response provision system using this approach.

Although Fig. 4 mainly refers to the generation of the cached generated embeddings 14, the same or at least similar procedure may apply when generating the current embeddings 13. If multiple embedding models 12 are used in this example, it may also be the case that, for some embedding models 12, multiple inputs 41 are used and, for other embedding models 12, only one input 41 is used, i.e., the model is only applied once with one input, e.g., the request. The specifics are up to the implementation and purpose of the cache-based response provision system using this approach.

It is noted that Fig. 4 is a mere example and does not limit the disclosure. Hence, the number of X different embedding models 12 can be any number between 1 and a suitable upper limit, e.g., determined based on applicable embedding models 12, computation resources, and the like. Moreover, although Fig. 4 depicts three different inputs 41-A to 41-C, which may, e.g., be the text of one request 41-A, the text of the corresponding response 41-B, and a combination (by appending etc.) thereof 41-C, there may be less (e.g., only a subset) or even different inputs 41, for example, a combination of multiple requests with or without the response, and such. In the embodiments of Fig. 4, the multiple generated embeddings 14-A, 14-B, 14-C, ..., 14-N are then stored with the response in the cache 15 and (at least a subset of them) taken into account when determining a similarity, e.g., by determining a similarity for all of them and building a median or the like. Examples of determining a similarity in these embodiments are explained with respect to Fig. 5 now.

Fig. 5 pertains to embodiments based on intermediate similarities. Intermediate similarities 51-A, 51-B, 51-C, ..., 51-N may be used when multiple generated embeddings 14-A to 14-N are stored per response in the cache 15, e.g., as described with respect to Fig. 4. In these examples, determining a similarity 52 of the one or more current embeddings 13-A, 13-B, ..., 13-M with the at least two generated embeddings 14-A to 14-N comprises determining an intermediate similarity 51-A, 51-B, 51-C, ..., 51-N between a current embedding 13-A to 13-M and a corresponding stored generated embedding 14-A to 14-N and combining intermediate similarities 51-A to 51-N for generating the similarity 52.

For example, assume that generated embeddings 14-A and 14-B are generated by the same embedding model 12-A, once for the request and once for the response, and generated embedding 14-C is generated by embedding model 12-B. Since there is only a current request 11 known but no response, the same embedding model 12-A can only be applied on the current request 11, leading to one comparable current embedding 13-A to which both generated embeddings 14-A and 14-B are compared (e.g., the distance and/or angle of the embedding vectors determined etc.). The intermediate similarities 51-A and 51-B may - of course - be different but will, if the current response 11 is similar to the requests stored for the response to which the generated embeddings 14-A and 14-B relate, both be high. Embedding model 12-B is consequently applied to the current request 11 to generate current embedding 13-B, which is then compared to generated embedding 14-C to determine the intermediate similarity 51-C.

In some examples, combining the intermediate similarities 51-A to 51-N comprises applying a weighted sum on the intermediate similarities 51-A to 51-N to determine the similarity 52. This similarity calculated by a weighted sum *WS* for a current request *req* and a response stored in the cache *resp* may be defined as follows:

$$WS(req, resp) = \sum_{i=1}^{X} \sum_{j=1}^{J_{M_i}} w_{ij}\, S\left(M_i(req), M_i\big(inp(resp)_j\big)\right),$$

in which $S(A, B)$ is a similarity function for embeddings $A$ and $B$, $M_i(y)$, $i = \{1, ..., X\}$ denotes the embedding model applied on input y (i.e., reflect a current or generated embedding) and $inp(resp)_j$, $j = \{1, ..., J_{M_i}\}$ relates to input(s) stored for a response for a specific embedding model $M_i$, i.e.., one or more requests, the response, a combination thereof, and the like. The weights $w_{ij}$ are, thus, model-specific and may even be specific to possible inputs for a cached response, i.e., the generated embeddings for a cached response.

This said, for a current request 11 and a stored response in the cache 15, a weighted sum is determined. The stored response 16 with the highest value of the weighted sum may then be returned to the requester - of course as shown in Fig. 2 - only when determining that the similarity, i.e., the value of the weighted sum, is above a threshold. Otherwise, the generation of a new response from original data source 17 may be triggered.

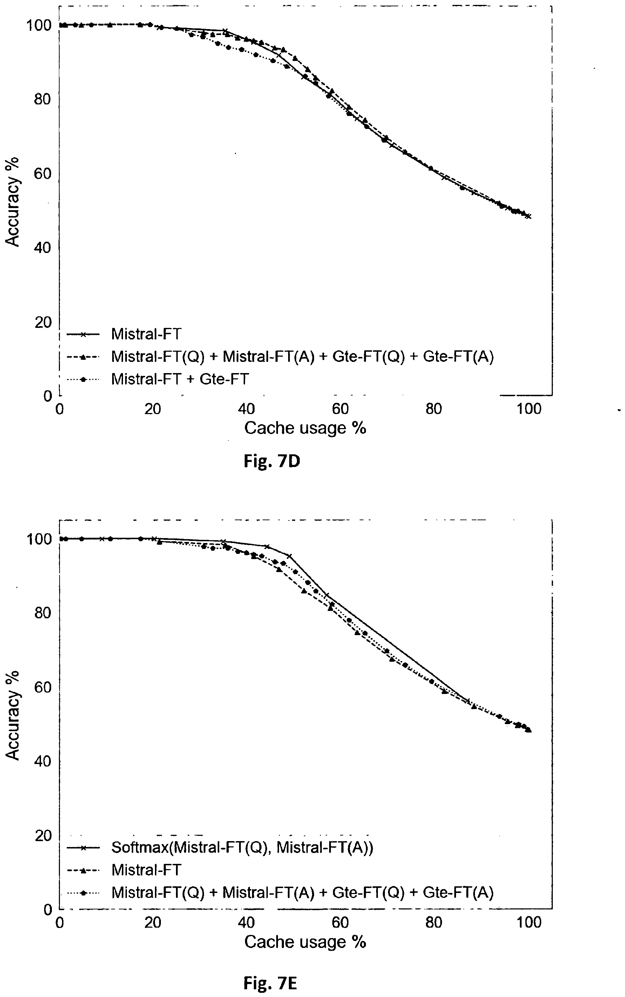

Determining the weights in this example may be done by applying a grid search optimization. Grid search allows to exhaustively search through a predefined set of weight values $w_{ij}$, evaluating the performance at each point on a grid of such weight values. The points of the grid reflect the set of possible combinations of values for the weights. The grid's dimension is $X \times max(J_M)$ but some grid points may define not suitable combinations, i.e., the number of grid points to evaluate may be significantly lower depending on possible weight combinations. Hence, determining of the weights requires some computational resources but is usually done less frequently, e.g., only once when setting up the architecture and implementation of the cache-base response generating system. The improvement with the weighted sum approach of the cache utilization for different accuracies is shown in Fig. 7D.

In some other examples, combining the intermediate similarities 51-A to 51-N comprises applying a weighted SoftMax function on the intermediate similarities 51-A to 51-N to determine the similarity 52. The similarity calculated by a weighted SoftMax function *WSM* for a current request *req* and a response stored in the cache *resp* may be defined as follows:

$$WSM(req, resp) = \sum_{i=1}^{X} \sum_{j=1}^{J_{M_i}} w1_{ij} \, \text{SoftMax}\left(w2_{ij} \, S\left(M_i(req), M_i(inp(resp)_j)\right)\right),$$

in which $S(A, B)$ is a similarity function for embeddings $A$ and $B$, $M_i(y)$, $i = \{1, ..., X\}$ denotes the embedding model applied on input $y$ (i.e., reflect a current or generated embedding) and $inp(resp)_j$, $j = \{1, ..., J_{M_i}\}$ relates to input(s) stored for a response for a specific embedding model $M_i$, i.e.., one or more requests, the response, a combination thereof, and the like. The weights $w1_{ij}$ and $w2_{ij}$ are model-specific and may even be specific to possible inputs for a cached response, i.e., the generated embeddings for a cached response. The SoftMax function is defined as:

$$SoftMax\left(w2_{kl} \, S(M_k(req), M_k(inp(resp)_l)\right) = \frac{e^{w2_{kl}S(M_k(req), M_k(inp(resp)_l)}}{\sum_{i=1}^{X} \sum_{j=1}^{J_{M_i}} e^{w2_{ij} \, S\left(M_i(req), M_i(inp(resp)_j)\right)}}.$$

Thus, the SoftMax function maps the similarity values to probabilities. So instead of having the similarity representing an answer to the question "how similar is the i-th stored answer to the user's question", the SoftMax solution answers the question "how probable is the i-th stored answer the required answer to the user's question when compared to the rest of the cached answers".

This said, for a current request 11 and a stored response in the cache 15, a weighted SoftMax function is determined with having two kinds of weights, outside and inside of the SoftMax function. The stored response 16 with the highest value of the weighted sum may then be returned to the requester - of course as shown in Fig. 2 - only when determining that the similarity, i.e., the value of the weighted sum, is above a threshold. Otherwise, the generation of a new response from original data source 17 may be triggered.

The idea behind the SoftMax approach can be illustrated by the following example. Assume a chatbot embodiment with 200 entries, i.e., cached responses, in the cache 15. Also, a large language model (LLM) is used that transforms language input to embeddings of size 4096 (i.e., a vector of 4096 numbers representing the text). Each request, i.e., question (related to cached responses, i.e., answers in the cache 15) is passed through the LLM and the output of the LLM are 200 vectors (one for each entry) of size 4096. Moreover, in this example, assume that also all answers are processed through the LLM and the outputs are also 200 vectors of size 4096 each. Hence, in this example, one embedding model 12, i.e., the LLM, is used for creating two generated embeddings 14 for each cached response, namely, one embedding for the response and another one for the associated (known) request.

If now a user or any other entity asks a question on the chatbot, the question is passed through the same LLM (i.e., the same embedding model 12). The output, i.e., the current embedding 13, is then again be a vector of 4096 numbers. The similarity function S provides a value of similarity for each generated embedding 14 for each cached response with the current embedding 13, i.e., intermediate similarities 51. This leads in this example to 400 intermediate similarity values, two for each cached response.

In this example, there is only one model (i.e., X = 1), two inputs for cached embeddings (i.e., $J_{M_1}$ = 2) with the embedding for the request being denoted as *Q* and the embedding for the response being denoted as A, and one embedding of the current request denoted as R. Hence, the formula for *WSM for* each cached response reduced to:

$$WSM(req, resp) = w1_1 \, \text{SoftMax}\left(w2_1 \, S(R, Q)\right) + w1_2 \, \text{SoftMax}\left(w2_2 \, S(R, A)\right).$$

Assume that the 155-th stored response with this formula obtains the highest value of a WSM, e.g., a value 0.89. If a similarity threshold less than 0.89 is set, the 155-th cached answer is the correct answer to the user's question and, e.g.,

returned to the user. If a similarity threshold higher than 0.89 is defined, e.g., 0.9, the cache 15 would not be used and another LLM, another model, or a human generates a response from the original data source 17. Therefore, selecting a suitable value for the similarity threshold controls the usage of the cache 15 and the accuracy of the returned answers. It is noted that the SoftMax function may yield high performance but the idea can be generalized for any other function (with or without parameters) that can be used to rank the cached responses. Depending on the characteristics of the cache 15, the kind of requests, and the overall architecture, another parameterized ranking function may be even more suitable.

Determining the weights in these examples may also be done by applying a grid search optimization. Grid search allows to exhaustively search through a predefined set of weight values $w1_{ij}$ and $w2_{ij}$, evaluating the performance at each point on a grid of such weight values. The points of the grid reflect the set of possible combinations of values for the weights. The grid's dimension is $X \times 2 \times \max(J_M)$ but some grid points may define not suitable combinations, i.e., the number of grid points to evaluate may be significantly lower depending on possible weight combinations. Hence, determining of the weights requires some computational resources but is usually done less frequently, e.g., only once when setting up the architecture and implementation of the cache-base response generating system. The improvement with the SoftMax approach of the cache utilization for different accuracies is shown in Fig. 7E.

Before going into further details on the improvements shown in Figs. 7A to 7E, we shortly turn to Fig. 6, which presents processes for updating the cache according to embodiments. In some examples, the method does not stop with returning the new response 18 (as shown with box 26) but also comprises (as shown with box 62) storing the new response 18 with corresponding one or more generated embeddings in the cache. This may generally be done, e.g., if there is sufficient memory available in the cache and/or in cases in which it can be ensured that the new response 18 is the correct response to the current request, e.g., because the new response 18 is generate by a human or at least generated under human supervision. In other examples, in which it cannot be ensured that the new response 18 is a correct response to the current request 11, a validation means (as shown with diamond 61) of determining that the new response 18 is correct may be applied. In other words, storing the new response 18 is performed in response to determining that the response was correct. For example, a human administrator may determine whether the response was correct. Additionally or alternatively, a computer-implemented algorithm may determined the correctness, e.g., based on a reaction of the entity submitting the current request 11 after reception of the new response 18.

When a new response 18 is stored in the cache 15, the current embedding(s) 13 may be stored with the new response 18 but also further embedding(s) that can only be created after determining the new response 18. For example, embeddings may be generated for the new response 18, i.e., with the new response 18 as input and/or a combination of the new response 18 and the current request 11 as input. Moreover, new, i.e., additional requests that also relate to the new response 18, i.e., that are similar to the current request 11, are created as described above, e.g., by another LLM. Embeddings for these may be generated as well. Moreover, as also indicated above, the cache 15 may only store the text of the new response 18 and the generated embeddings 14 but also - in some embodiments - the one or more requests associated with it.

The advantages of the herein described cache-based response provision methods and systems are illustrated in Figs. 7A to 7E, which will be further explained in the following. Fig. 7A generally depicts the behaviour in terms of cache-usage versus accuracy of the above-mentioned three known embedding models ada-002, Gte-large, and Mistral-7B. The general assumptions of the experiments depicted in Figs. 7A to 7E are the same: Responses to 50% of the requests transmitted are cached, the other 50% of requests have no associated response in the cache. Hence, with 50% cache-usage, the optimal accuracy would still be 100%. However, the models can only use 10% of the time the cache to still have 100% accuracy. If 90% accuracy is a sensible expectation, the models still only use less than 35% of the time the cache. For 50% cache-usage, the models only achieve an accuracy of less than 75%. Overall considered, the Mistral-7B model and the ada-002 perform best but all shown similar behaviour.

Fig. 7B shows the improvement, which is achieved, when the models are fine-tuned, which is indicated by "-FT" in the labels. Fig. 7B shows the graphs of the non-fine-tuned Gte-large (also denoted as "Gte" only) and Mistral-7B (also denoted as "Mistral" only) and the graphs of the fine-tuned versions. A significant improvement can be seen. Instead of using only 35% of the time the cache for 90% accuracy, the Mistral-7B in its fine-tuned version uses the cache about 45% of the time. For 50% cache-usage, the accuracy is slightly below 90% instead of below 75%. The same can be observed for the Gte-large. It is noted that the ada-002 cannot be fine-tuned as it is not open source. Hence, if closed source embedding models are to be applied, fine-tuning is not alternative for improving the behaviour. As already stated above, fine-tuning required plenty of resources and other solutions are beneficial.

Improvements of such solutions, namely, the herein described solutions with a combination model are shown in Fig. 7C. The improvement to the original model (Mistral-7B) is again significant and achieves a similar range as the fine-tuning. In the depicted implementations, a linear head (with a linear neural network) is used, once only with one model application and once with combining two outputs for different inputs (request and request & response) to one model (Mistral-7B). It can be seen that the combination performs best and provides an accuracy of 90% when using 50% of the time the cache.

Fig. 7D shows the cache-usage and accuracy for the herein described weighted sum approach. As can be seem, the fine-tuned mistral still performs good but the combination of Mistral and Gte for requests (Q) and responses (A) achieves over 90% accuracy when using the cache 50% of the time. Hence, the trade-off between accuracy and cache-usage is handled best by this combination. Moreover, it is noted that the weighted sum can be applied on fine-tuned models but also on original models and has, thus, a high flexibility.

Fig. 7E shows the cache-usage and accuracy for the herein described weighted SoftMax approach, which achieved the highest accuracy for a 50% cache-usage. With only applying one embedding model (Mistral) on the request and on the response, the approach achieves an accuracy of more than 96% for 50% cache-usage. The calculation of the weighted SoftMax function requires more resources than for the weighted sum but the weighted SoftMax provides a significant improvement in terms of the trade-off between accuracy and cache-usage while only relying on one embedding model. Hence, if the accuracy and cache-usage are the most relevant conditions to be considered, the weighted SoftMax approach performs best.

Finally, Fig. 8 is a diagrammatic representation of internal components of a computing system 80 implementing the methods and/or the functionality of one or more of the components as described herein. The computing system 80 includes at least one processor 81, a user interface 82, a network interface 83 and a main memory 86, that communicate with each other via a bus 85. Optionally, the computing system 80 may further include a static memory 87 and a disk-drive unit (not shown) that also communicate with each via the bus 85. A video display, an alpha-numeric input device and a cursor control device may be provided as examples of user interface 82. Furthermore, the computing system 80 may also comprise one or more graphics processing units (GPU) 84.

The GPUs 84 may also comprise a plurality of GPU cores or streaming multiprocessors, which comprise many different components, such as at least one register, at least one cache and/or shared memory, and a plurality of ALUs,. FPUs, tensor processing unit (TPU) or tensor cores, and/or other optional processing units. GPUs can perform multiple simultaneous computations, thereby enabling the distributing of training processes and speeding up machine learning operations.

The main memory 86 may be a random-access memory (RAM) and/or any further volatile memory. The main memory 86 may store program code 88a and may also store additional program data 88b required for providing the functionalities described herein. Moreover, the main memory 86 may also include a cache 89 for caching instructions or temporary data needed for execution of the methods described herein.

According to an aspect, a computer program comprising instructions is provided. These instructions, when the program is executed by a computer, cause the computer to carry out the methods described herein. The program code embodied in any of the systems described herein is capable of being individually or collectively distributed as a program product in a variety of different forms. In particular, the program code may be distributed using a computer readable storage medium having computer readable program instructions thereon for causing a processor to carry out aspects of the embodiments described herein.

Computer readable storage media, which are inherently non-transitory, may include volatile and non-volatile, and removable and non-removable tangible media implemented in any method or technology for storage of information, such as computer-readable instructions, data structures, program modules, or other data. Computer readable storage media may further include random access memory (RAM), read-only memory (ROM), erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer.

A computer readable storage medium should not be construed as transitory signals per se (e.g., radio waves or other propagating electromagnetic waves, electromagnetic waves . propagating through a transmission media such as a waveguide, or electrical signals transmitted through a wire). Computer readable program instructions may be downloaded to a computer, another type of programmable data processing apparatus, or another device from a computer readable storage medium or to an external computer or external storage device via a network.

It should be appreciated that while particular embodiments and variations have been described herein, further modifications and alternatives will be apparent to persons skilled in the relevant arts. In particular, the examples are offered by way of illustrating the principles, and to provide a number of specific methods and arrangements for putting those principles into effect.

In certain embodiments, the functions and/or acts specified in the flowcharts, sequence diagrams, and/or block diagrams may be re-ordered, processed serially, and/or processed concurrently without departing from the scope of the disclosure. Moreover, any of the flowcharts, sequence diagrams, and/or block diagrams may include more or fewer blocks than those illustrated consistent with embodiments of the disclosure.

The terminology used herein is for the purpose of describing particular embodiments only and is not intended to be limiting of the embodiments of the disclosure. It will be further understood that the terms "comprise" and/or "comprising," when used in this specification, specify the presence of stated features, integers, processes, operations, elements, and/or components, but do not preclude the presence or addition of one or more other features, integers, processes, operations, elements, components, and/or groups thereof. Furthermore, to the extent that the terms "include", "having", "has", "with", "comprised of", or variants thereof are used in either the detailed description or the claims, such terms are intended to be inclusive in a manner similar to the term "comprising".

While a description of various embodiments has illustrated the method and while these embodiments have been described in considerable detail, it is not the intention of the applicants to restrict or in any way limit the scope of the appended claims to such detail. Additional advantages and modifications will readily appear to those skilled in the art. The disclosure in its broader aspects is therefore not limited to the specific details, representative apparatus and method, and illustrative examples shown and described. Accordingly, the described embodiments should be understood as being provided by way of example, for the purpose of teaching the general features and principles, but should not be understood as limiting the scope, which is as defined in the appended claims.

**Claims**

1. Computer-implemented method for cache-based response provision comprising:

    • storing responses to requests in a cache, wherein each response is associated with one or more generated embeddings relating to the response and/or at least one request corresponding to the response, wherein the one or more generated embeddings are created by applying at least one embedding model to the at least one request and/or the response,
    wherein applying the at least one embedding model comprises applying at least two different embedding models to at least one input and/or applying the same embedding model on at least two different inputs, wherein inputs comprise at least two of the at least one request, the response, and a combination of the request and the response;
    • receiving a current request;
    • determining a similarity of one or more current embeddings generated for the current request by application of the at least one embedding model with the one or more generated embeddings of each response stored in the cache;
    • in response to determining that the similarity of the one or more current embeddings with the one or more generated embeddings of at least one response is above a threshold, returning the response associated with the one or more generated embeddings with the highest similarity; and
    • in response to determining that the similarity of the one or more current embeddings with the one or more generated embeddings of at least one response is not above the threshold, generating a new response from an original data source and returning the new response.

2. The method of claim 1, wherein storing responses to requests in the cache comprises generating at least one generated embedding per response by feeding a combination model with embeddings outputted by the at least two different embedding models and/or by the same embedding model for the at least two different inputs, wherein the combination model outputs the at least one generated embedding.

3. The method of claim 2, wherein the combination model is a linear neural network.

4. The method of claim 1, wherein storing responses to requests in the cache comprises generating at least two generated embeddings per response, wherein each generated embedding is generated by applying an embedding model on an input, wherein at least two different embedding models are applied and/or the same embedding model is applied with different inputs.

5. The method of claim 4, wherein determining a similarity of the one or more current embeddings with the at least two generated embeddings comprises determining an intermediate similarity between a current embedding and a corresponding stored generated embedding and combining intermediate similarities for generating the similarity.

6. The method of claim 5, wherein combining the intermediate similarities comprises applying a weighted sum on the intermediate similarities.

7. The method of claim 5, wherein combining the intermediate similarities comprises applying a weighted SoftMax function on the intermediate similarities.

8. The method of claim 6 or claim 7, wherein weights are determined by a grid search optimization.

9. The method of any preceding claim further comprising storing the new response with corresponding one or more generated embeddings in the cache.

10. The method of claim 9, wherein storing the new response is performed in response to determining that the response was correct.

11. The method of any preceding claim, wherein the embedding models comprise large language models.

12. The method of any preceding claim, wherein the requests are natural language-based questions and wherein the responses are natural language-based responses.

13. The method of any preceding claim, wherein at least two different requests are associated with a single response stored in the cache, wherein at least one of the at least two different requests is generated by a large language model.

14. Computer system for cache-based response provision comprising:

   • at least one memory comprising a cache; and
   • at least one processor;

   wherein the at least one processor is configured to execute the method according to any one of claims 1 to 13.

15. Computer program product comprising program code instructions stored on at least one computer readable medium, wherein the program code instructions, when executed by processors of a computing system, cause the processors of the computing system to execute the method according to any one of claims 1 to 13.

**Fig. 1**

Storing responses to requests in a cache — 21

Receiving a current request — 22

Determining a similarity of current embedding(s) with stored generated embedding(s) for response — 23

Similarity > threshold — 24

y

n

Return cached response with highest similarity — 25

Generate and return new response — 26

**Fig. 2**

Fig. 3

Fig. 4

Fig. 5

Fig. 6

Fig. 7A

Fig. 7B

Fig. 7C

**Fig. 7D**

**Fig. 7E**

80

82        83        84

81

| CPU | User I/F | NW I/F | GPU |

86

85

87

Memory

89

Program code

88a

Cache

Static Memory

Program data

88b

**Fig. 8**

## EUROPEAN SEARCH REPORT

**Application Number**

EP 24 31 5462

### DOCUMENTS CONSIDERED TO BE RELEVANT

| Category | Citation of document with indication, where appropriate, of relevant passages | Relevant to claim |
|---|---|---|
| X | WARIS GILL ET AL: "Privacy-Aware Semantic Cache for Large Language Models", ARXIV.ORG, CORNELL UNIVERSITY LIBRARY, 201 OLIN LIBRARY CORNELL UNIVERSITY ITHACA, NY 14853, 3 April 2024 (2024-04-03), XP091717728, * page 3 - page 6; figure 2 * ----- | 1-15 |
| X | WARIS GILL ET AL: "MeanCache: User-Centric Semantic Cache for Large Language Model Based Web Services", ARXIV.ORG, CORNELL UNIVERSITY LIBRARY, 201 OLIN LIBRARY CORNELL UNIVERSITY ITHACA, NY 14853, 15 July 2024 (2024-07-15), XP091818820, * page 3 - page 6 * ----- | 1-15 |

**CLASSIFICATION OF THE APPLICATION (IPC)**

INV.
G06F12/0802
G06N3/045
G06N3/08
G06F12/0893

**TECHNICAL FIELDS SEARCHED (IPC)**

G06F
G06N

The present search report has been drawn up for all claims

| Place of search | Date of completion of the search | Examiner |
|---|---|---|
| The Hague | 21 March 2025 | Toader, Elena Lidia |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
.........................................................................
& : member of the same patent family, corresponding
   document

EPO FORM 1503 03.82 (P04C01)